# EUROPEAN PATENT APPLICATION

(11) **EP 1 631 120 A2**
(43) Date of publication of application: **01.03.2006**
(21) Application number: 05076947.0
(22) Date of filing: 25.08.2005
(51) Int. Cl.: H04S 7/00

(54) **System and process for automatically adjusting the acoustic settings of an audio system**

(30) Priority: 31.08.2004 US 930501
(71) Applicant: Delphi Technologies, Inc., Troy, MI 48007 (US)
(72) Inventor: Hjelmeland, Robert W., Kempton, IN 46049 (US)
(74) Representative: Denton, Michael John

(57) **Abstract**

The present invention provides systems (20, 100, 110, 120, 130, 140, 150) and a process (10) for automatically adjusting acoustic settings that best fit the program type of an audio device. The present system includes an auto-tone control (40) comprising a micro controller (41) for identifying PTY information based on a PTY information signal received; and software (42) operably connected to the micro controller (11), the software (42) includes an optimization algorithm for enabling the identification of the PTY information and providing an acoustic setting signal based on one of a plurality of acoustic settings corresponding to the identified PTY information.

## Description

### TECHNICAL FIELD

The present invention relates to an audio device and particularly to an automatic tone control device.

### BACKGROUND OF THE INVENTION

Modem audio systems whether at home or in the vehicle often support methods of perceptual audio modifications. These methods allow the room or vehicle cabin to take on the acoustic appearance of a symphony hall, theatre, stadium etc. The acoustic perception is achieved by delaying speaker performance and/or changing acoustic settings for one or more speakers.

Some systems provide an automatic tone control which may be referred to as an "auto-tone" to enhance listening experience by matching the acoustical presettings of the audio system to the audio display program. The presettings are designed such that the acoustic quality is at optimum for different type of program. Typically, auto-tones that are available in the market require manual selections via a series of button presses to match acoustic presetting to the type of program selected. For example, a button combination (direct button entry or selection from a menu) programmed with a presetting for Jazz may be pressed when the listener is listening to jazz, and a button combination with a presetting for country music may be pressed when the listener is listening to country music.

The current auto-tones operation may further be dissatisfactory when the same station broadcasts different types of program. For example when the listener is listening to a jazz station, and a news segment or announcer (DJ) comes on, the presetting for jazz remains active, and the listener may not hear the news or the announcement clearly. This is particularly important in a mobile environment (e.g. vehicle) where adjustments made to the audio system can be a distraction from the safe operation of the vehicle.

### SUMMARY OF THE INVENTION

The present invention provides a system and process for automatically adjusting acoustic settings that best fit the program type of a sound production. The present system includes an auto-tone control comprising a micro controller for identifying program type (PTY) information based on a PTY information signal received; and software containing a predetermined optimization algorithm operably connected to the micro controller for enabling optimization of acoustic settings corresponding to the identified PTY information. The auto-tone control of the present invention may be incorporated within a variety of devices such as a radio, a television, a CD/DVD player, or Compressed audio player (for MP3 players), a tape player.

The auto-tone control of the present invention may be adapted to recognize the PTY information signal according to any broadcasting standard, such as Frequency Modulated Radio Data System (FM RDS), Frequency Modulated Radio Broadcast Data System (FM RBDS), In-Band-On Channel (IBOC) broadcast system, Digital Audio Broadcasting (DAB) system, Sirius Satellite Radio, XM Satellite Radio and Satellite Digital Audio Radio (SDAR)

Alternatively, the auto-tone control may be adapted to receive the PTY information signal in any form of programming genre which may be encoded in any audio media such as a compact disc (CD), a digital versatile disc (DVD), Compressed Audio Player (such as Ipod), an audio tape or a flash memory stick.

Further, the auto-tone control of the present invention may also be adapted to receive PTY information signal from any suitable high speed data systems such as Fiber Optic, MOST, D2B, USB, 802.11 or Intellibus.

The present invention further provides an audio system comprising an auto-tone control as above-described, and an audio device for producing sound from the adjusted audio output corresponding to the identified PTY information.

The audio device may be a radio, a television, a tape player or a personal computer with an audio capability, or any combination thereof. The audio device may further include a receiver operably connected to the auto-tone control. The receiver may include an antenna for facilitating the reception of the audio and PTY information signals. The receiver may be adapted to receive audio and PTY information signals from at least one of: FM RDS, FM RBDS, IBOC, DAB, SDAR, Sirius Satellite Radio and XM Satellite Radio.

The audio device may include an amplifier operably connected to the auto-tone control and for driving at least one speaker.

The auto-tone control may be disposed within the amplifier or the receiver or disposed remotely from the amplifier or the receiver.

Additionally, the present invention further provides a process for automatically adjusting an audio output based on program type (PTY) information. The process comprises the steps of: (a) receiving an audio signal coupled with a PTY information signal; (b) processing the PTY information signal to identify PTY information; (c) using a predetermined algorithm to identify acoustic settings to best fit the identified PTY information; (d) producing an adjusted audio output using the identified acoustic settings; and (e) producing adjusted sound.

### BRIEF DESCRIPTION OF THE DRAWINGS

The above-mentioned and other features and advantages of this invention, and the manner of attaining them, will become more apparent and the invention itself will be better understood by reference to the following description of embodiments of the invention taken in conjunction with the accompanying drawings, wherein:
Figure 1 is a flow diagram showing a general process according to the present invention;
Figure 2 is a diagram showing the internal working of the audio system of the present invention;
Figure 3 is a diagram illustrating an audio system according to an embodiment of the present invention with an internal amplifier;
Figure 4 is a diagram illustrating an audio system according to another embodiment of the present invention, the audio system having a "remote fixed" amplifier;
Figure 5 is a diagram illustrating an audio system according to an alternative embodiment of the present invention, the audio system having a "remote smart" amplifier;
Figure 6 is a diagram illustrating an audio system according to another alternative embodiment of the present invention, the audio system having a remote receiver;
Figure 7 is a diagram illustrating an audio system according to another alternative embodiment of the present invention, the audio system having a remote receiver and a "remote fixed" amplifier;
Figure 8 is a diagram illustrating an audio system according to another alternative embodiment of the present invention, the audio system having a remote receiver and a "remote smart" amplifier; and
Figure 9 is a diagram illustrating an audio system according to another embodiment of the present invention, the audio system adapted for use with a high speed data system in a ring configuration.

Corresponding reference characters indicate corresponding parts throughout the several views. Although the drawings represent embodiments of the present invention, the drawings are not necessarily to scale and certain features may be exaggerated in order to better illustrate and explain the present invention. The exemplification set out herein illustrates an embodiment of the invention, in one form, and such exemplifications are not to be construed as limiting the scope of the invention in any manner.

### DESCRIPTION OF THE PREFERRED EMBODIMENTS

Commercial broadcasting commonly generates Program Type (PTY) information as ancillary information. The PTY information may be used to indicate programming genre, song title, artist name, and album name. Taking an advantage of PTY information, the present invention provides an auto-tone control that allows an audio system to automatically select the best settings of the audio modification (equalizer settings and / or acoustic appearance) based on the PTY information. The acoustic settings may be pre-programmed to correspond to individual broadcasting station memory sets. For example, the auto-tone of the present invention may operate to identify an acoustic presetting for news, when the listener selects a specific news broadcasting station. Similarly, when the listener selects a "pop" music station, the auto-tone switches the acoustic presetting to the pop music setting.

This dynamically changing acoustic presentation could also be provided as a function of the programming on a single channel. For example, the consumer may be listening to FM radio or SDAR in the vehicle. The music comes to an end at the half-hour and a news report comes on. The audio system with the auto-tone control of the present invention would automatically adjust the acoustic settings based on PTY information received with the audio signal, affecting the change from e.g. Jazz settings gives way to TALK settings (with higher treble).

The use of the present invention may include a home theatre application. For example, while watching a sporting event, the system having an auto-tone control of the present invention may default to Stadium acoustics, with mid base, low treble. Changing the channel to the News, the auto-tone control of the present invention would automatically change the acoustic settings to 5 speaker surround, mid base, high treble, as an example.

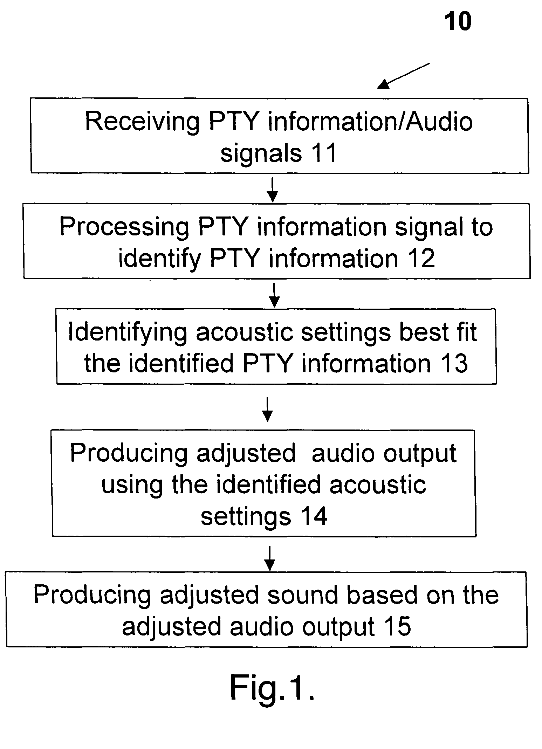

Referring now to Figure 1, a flow chart of a general process of the present invention is shown. As shown, process 10 involves the steps of receiving PTY information signal (11) from either a remote or a line-connected source, processing the PTY information signal (12) to identify PTY information, identifying acoustic settings that best fit the identified PTY information (13), producing an adjusted audio output using the identified acoustic settings (14), and producing adjusted sound (15).

The step of receiving the PTY signal (11) may be performed by any suitable receiver adapted to receive the corresponding type or format of the PTY signal which may be coupled with the audio signal. For example, the receiver may be configured to receive the signal from the FM Radio Data System (FM RDS), FM Radio Broadcast Data System (FM RDBS) standards, Sirius and XM Satellite Radio, Digital Audio Broadcasting (DAB), Satellite Digital Audio Radio (SDAR), or In-Band-On Channel (IBOC) system or CD, DVD or tape. It is to be understood that the term "PTY information" is being used herein to refer to any programming genre, either being broadcasted, e.g., Program Associated Text (PAT) produced by Sirius or XM Satellite radio, or encoded in any audio medium, e.g., a CD, a DVD or a flash memory stick. It is to be understood also that the term "acoustic settings" may include tone, equalizer, balance, fade, room simulations or effects, volume, and other fidelity settings.

An auto-tone control of the present invention is provided to perform the steps of processing the PTY information signal (12) identifying acoustic settings (13) based on the identified PTY information, and producing the adjusted audio output (14). The step of producing adjusted sound (15) is normally performed through one or more amplifier driven speakers.

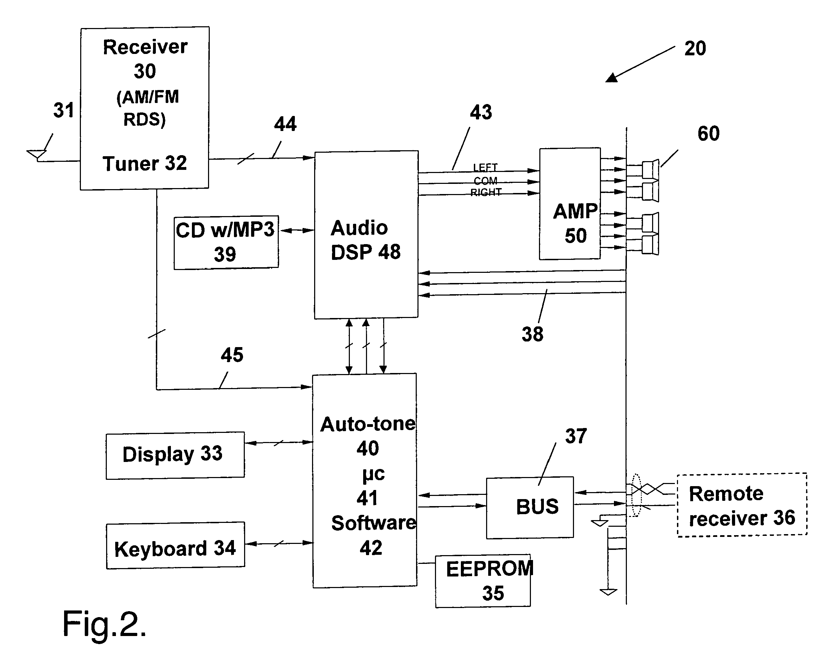

Figure 2 contains a diagram illustrating the overall internal working scheme of an audio application in which the auto-tone control of the present invention is incorporated. As shown audio system 20 comprises receiver 30 adapted to receive AM/FM RDS, and operably connected to auto-tone control 40 and audio digital system processor (DSP) 48. DSP 48 contains all the audio settings, such as equalizer setting, balance, fade, and room simulations/effects. DSP 48 may be connected to amplifier (Amp) 50 which drives one or more speakers 60. As illustrated in Figure 2, the AM/FM RDS audio and PTY information signals may be received by receiver 30 through antenna 31 which facilitates the reception of the signals. The signals may be modulated by tuner 32 provided with receiver 30. The raw audio signal is presented to the audio DSP 48 via audio conduit 44, PTY information signal is presented to auto-tone control algorithm 40 via PTY information signal conduit 45. The micro controller 41 has software 42 programmed with an algorithm for enabling recognition of PTY information based on the received signal. Based on the recognized information, auto-tone control 40 then instructs DSP 48 which settings best fit the recognized PTY information. DSP 48 produces an adjusted audio output using the identified settings, and then presents the adjusted audio output to Amp 50, which drives one or more of the system speakers 60.

Further as illustrated in Figure 2, auto-tone control 40 may be configured to interface with remote receiver 36 which is adapted to receive a different broadcasting digital signal such as SDARS or DAB. Receiver 36 presents audio signal to DSP 48 through audio via 38. PTY signal is sent to auto-tone control 40 through system bus 37. Auto-tone control 40 then instructs DSP 48 which settings to use for the recognized PTY information. DSP 48 presents the adjusted audio output to Amp 50 to drive one or more of the system speakers 60, as above-described.

Also, as illustrated in Figure 2, micro controller 41 of auto-tone control 40 may drive radio display 33 which provides the listener/consumer with visual feedback. Further, the listener/consumer may enable or disable the auto-tone control 40 by using an on-off button (not shown) on radio keyboard 34. The auto-tone algorithm may also be modified by the use of radio keyboard 34 which may include menu selection options in the acoustic controls. The menu selection options may be operated in many ways, as commonly known in the art. For example, a preprogrammed button may be hit once for fade, again for balance, or again for auto-tone settings. Once the settings are configured by the listener/consumer, the setting preferences may be sent by micro controller 41 to be saved in an electrically erasable programmable read-only memory EEPROM 35. EEPROM 35 may or may not be internal of auto-tone control 40 or micro controller 41. Non-volatile memory such as EEPROM 35 would typically be used for listener/consumer convenience, however other memory types could be employed.

In addition, Audio system 20 shown in Figure 2 may include a CD player 39 capable of playing a CD having compressed audio format (such as MP3, WMA, AAC, etc). The audio/PTY codes may be decoded and communicated to DSP 48 and auto-tone control 40. Micro controller 41 may recognize the PTY or programming genre code and instruct DSP 48 with an acoustic setting signal to adjust the acoustic settings in accordance with the recognized programming. DSP 48 then produces an adjusted audio output and presents to Amp 50 as above-described. Then Amp 50 subsequently sends the adjusted audio output to one or more speakers 60. It is to be understood that CD play 39 may be replaced with a DVD player or a flash memory stick or any other similar audio device.

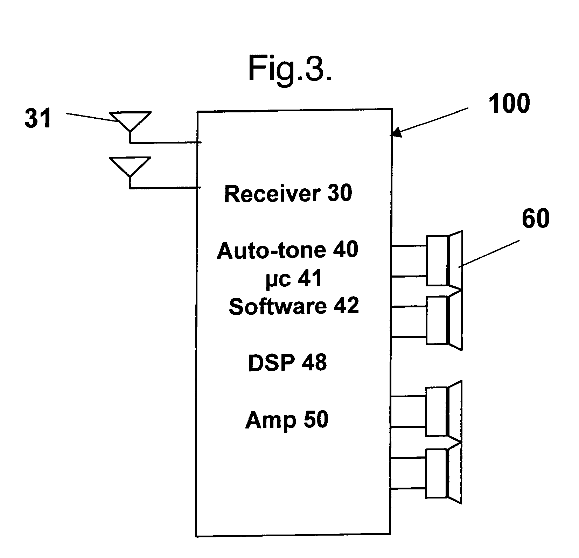

It is contemplated that the components of the audio system of the present invention may be physically arranged relative to one another in many varying embodiments depending on specific applications. For example, as shown in Figure 3, a basic system application may consist of radio 100 having internal receiver 30, auto-tone control 40, DSP 48 and Amp 50. It is to be understood that radio 100 may include tuners, control buttons, visual display windows and other components not specifically described herein, but normally found on/in a typical radio. Auto-tone control 40 of the present invention has micro controller 41 and software 42 capable of recognizing the PTY information received and enabling acoustic settings best fit the recognized PTY information, as above-described. Radio 100 may be operably connected to antenna 31 and speakers 60. Antenna 31 helps facilitate the reception of the broadcasting signals. DSP 48 produces the adjusted audio output and presents to internal Amp 50, which drives speakers 60. Speakers 60 produce the adjusted sound.

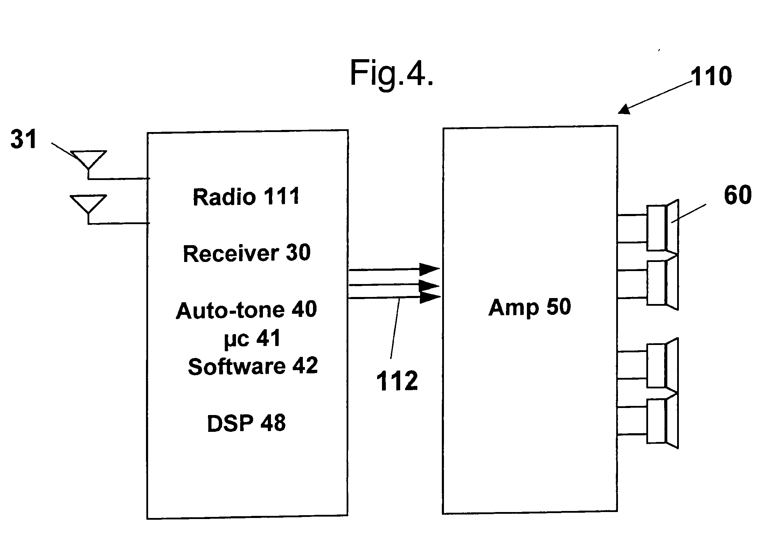

Referring now to Figure 4, audio system 110 shown is an alternative embodiment of the audio system of the present invention. Audio system 110 is similar to a typical premium radio such as that provided in a vehicle. The premium radio usually has a remote amplifier, likely disposed in the trunk of the vehicle, and connected to a radio, which is usually disposed interiorly of the vehicle. As shown in Figure 4, audio system 110 has radio 111 containing receiver 30, DSP 48 and auto-tone control 40, while Amp 50 is remotely connected to radio 110. Amp 50 in this specific configuration is known as a "remote fixed" amplifier, which simply drives the speakers according to the acoustic level received from the DSP. In this specific embodiment, micro controller 41 and software 42 of auto-tone control 48 recognizes the PTY information received by internal receiver 30 and adjusts the acoustic settings in DSP 48, based on the recognized PTY information. DSP 48 produces the adjusted audio output, presents to Amp 50, which passes the audio output through audio via 112 to speakers 60.

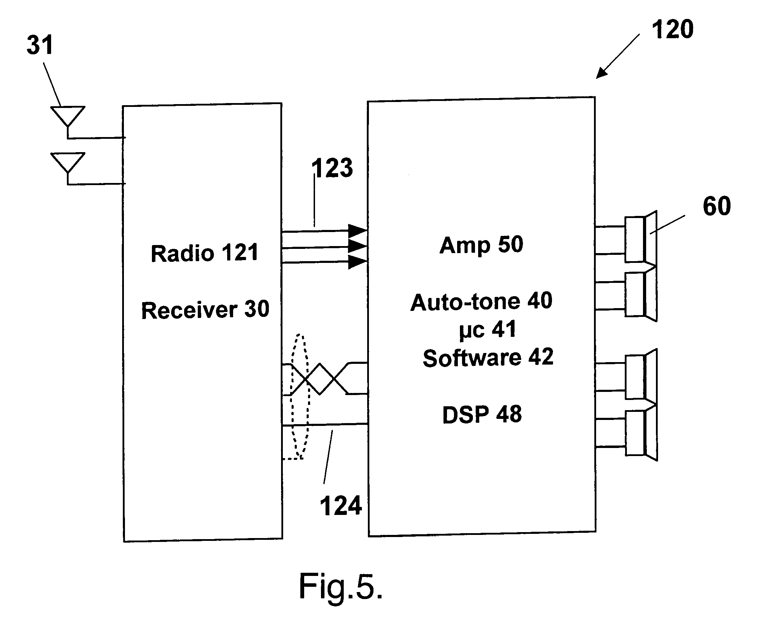

In an alternative embodiment presented in Figure 5, audio system 120 comprises radio 121 operably communicated with remote Amp 50. DSP 48 and auto-tone control 40 are disposed within Amp 50, while receiver 30 is disposed in radio 121. Amp 50 in this specific embodiment represents a "remote smart" amplifier, which may internally modify the acoustic settings. Like in previous embodiment, antenna 31 may be provided with radio 121 to facilitate the reception of the broadcasting signals. Receiver 30 receives audio and PTY information signals and sends the audio signal to DSP 48 by means of audio vias 123 and PTY information signal to auto-tone control 40 by means of communication bus 124. Micro controller 41 with software 42 adjusts the acoustic settings in DSP 48 in Amp 50, which subsequently drives speakers 60 to produce the adjusted sound.

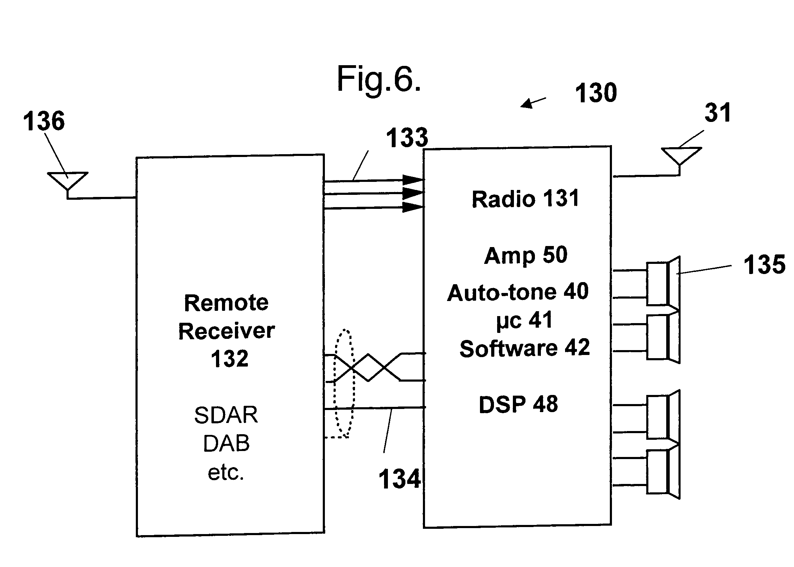

In Figure 6, audio system 130 represents another embodiment of the present invention that may be used to support a remotely located receiver. Audio system 130 includes radio 131 having auto-tone control 40, DSP 48, and Amp 50 integrated therewithin. Radio 131 is operably connected to remote receiver 132, which is adapted and positioned to receive SDAR or DAB or any other signal coupled with PTY information signal. For example, receiver 132 may be disposed in the trunk. As shown, receiver 132 may include antenna 136 for facilitating the reception of the broadcasting signals. After receiving the broadcasting signals, receiver 132 may transform the received broadcasting audio signal to a line-level audio signal and transfer the transformed audio signal by means of audio via 133 to radio 131. At the same time, receiver 132 may transform the received PTY signal to line-level information signal and transfer the transformed line-signal to auto-tone control 40 by means of internal vehicle bus 134. Auto-tone control 40, which is integrated with Amp 50 within radio 131, includes micro controller 41 with software 42 as above-described. Micro-controller 41 with software 42 identifies the PTY information, and based on the PTY information, micro-controller 41 affects the adjustment of the acoustic settings in DSP 48. Amp 50 drives speakers 60 to produce the adjusted sound.

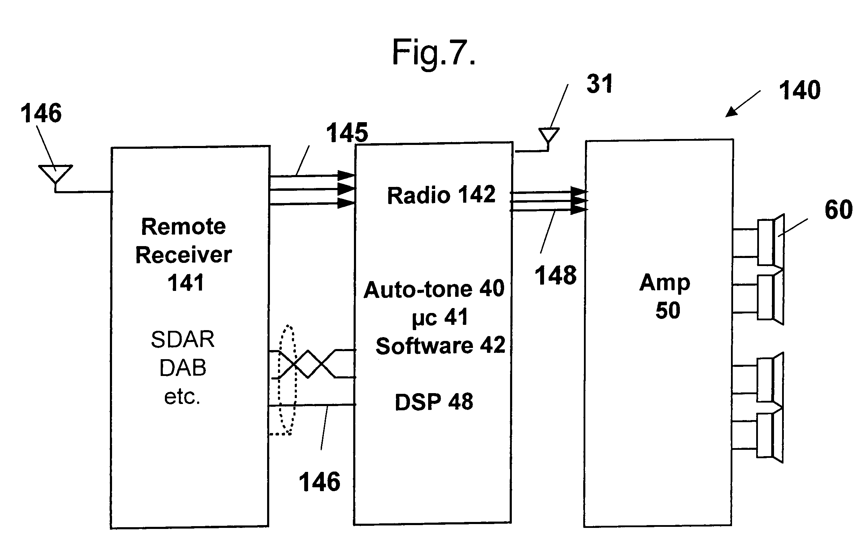

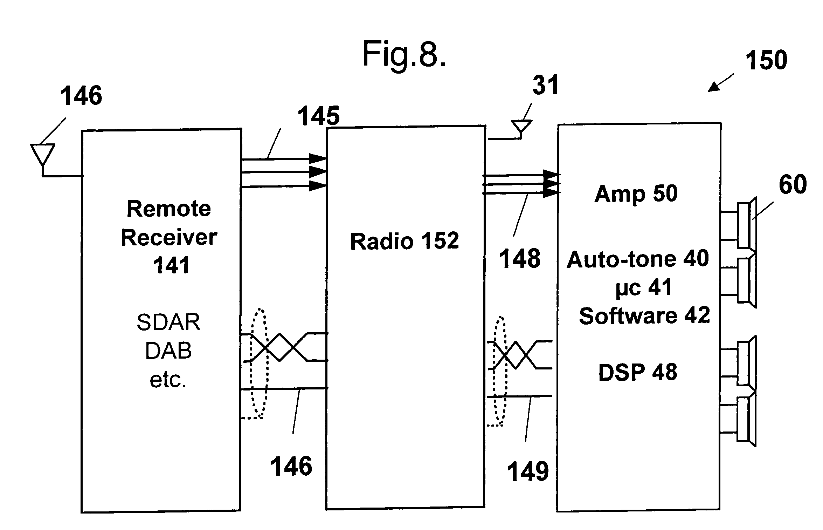

Figures 7-8 represent alternative embodiments of the audio-system of the present invention. Audio systems 140 (Figure 7), and 150 (Figure 8) include remote receiver 141, and remote Amp 50. Remote receiver 141 is adapted and positioned to receive SDAR or DAB or other digital or satellite audio signal coupled with PTY information signal, as above described. Receiver 141 may include antenna 146 for facilitating the reception of the broadcasting signals. Receiver 141 is capable of transforming the broadcasting signal into line-level signals and transferring the transformed audio signal through audio via 145 to radio 142 (Figure 7) or radio 152 (Figure 8). PTY information signal is communicated through vehicle bus 146 to radio 142 (Figure 7) or radio 152 (Figure 8). In the specific embodiment shown in Figure 7, radio 142 contains DSP 48 and auto-tone control 40 including micro controller 41 and software 42. In this embodiment, micro controller 41 and software 42 of auto-tone control 40 recognizes the PTY information received, adjusts the acoustic settings in DSP 48, based on the recognized PTY information, and sends adjusted audio output through audio via 148 to remote Amp 50. Since Amp 50 in this specific embodiment is "remote fixed," Amp 50 simply drives speakers 60 to produce the adjusted sound.

Further in Figure 8, auto-tone control 40 and DSP 48 are integrated with Amp 50, instead of radio 152. Radio 152 receives the transformed audio and PTY signals from receiver 141 and passes the transformed signals to Amp 50 via corresponding audio via 148 or vehicle bus 149. Amp 50 in this specific embodiment is a "remote smart" amplifier having auto-tone control 40 residing therein. Auto-tone control 40 within smart Amp 50 affects the acoustic settings of DSP 48 and Amp 50 drives speakers 60 to produce the adjust sound.

It is possible that radio 131, 142 and 152 (see Figures 6-8) may also contain an internal receiver (not shown) connected to radio antenna 31 for receiving audio and PTY signals from FM/AM broadcasting. Auto-tone control 40 of audio systems 130, 140 and 150 (Figures 6-8) may contain micro controller 41 and software 42 that are capable of recognizing a plurality of formats of signals communicated from a plurality of sources.

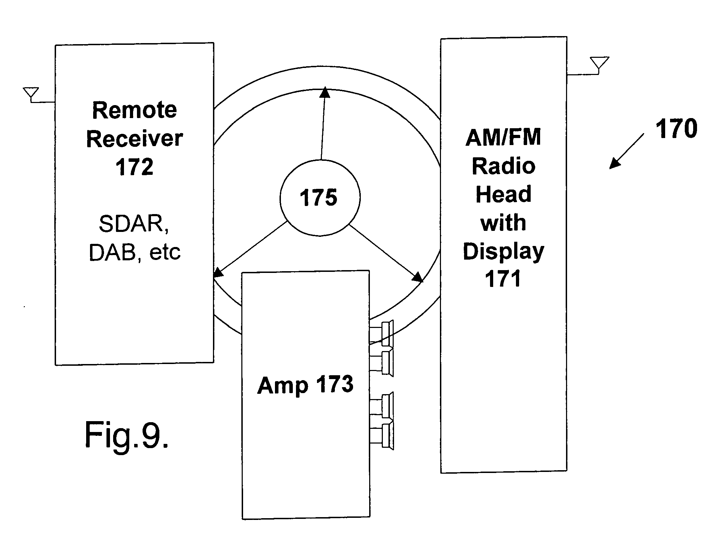

It is contemplated that the auto-tone control of the present invention may also be integrated with other audio systems that produce digital audio and PTY information in the same data stream (See Figure 9). Examples of the applicable systems include Fiber Optic and high speed data systems such as MOST, D2B, USB, 802.11, and Intellibus systems. As demonstrated in Figure 9, audio system 170 includes remote receiver 172, which may decode PTY information and "raw" audio information. Remote receiver 172 may format the PTY and audio information for transmission on the communication bus 175. Head Unit 171 may decode the associated PTY for optional visual display to the listener/consumer. Remote amplifier 173 would process the "raw" audio information through the auto-tone algorithms in the same manner as described previously (remote smart amplifier).

While the present invention has been described as having exemplary embodiments, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. An auto-tone control (40) comprising:
a micro controller (41) for identifying program type (PTY) information based on a PTY information signal; and
software (42) operably connected to the micro controller (41), said software (42) including an optimization algorithm for enabling the identification of the PTY information and providing an acoustic setting signal based on one of a plurality of acoustic settings corresponding to the identified PTY information.

2. The auto-tone control (40) of claim 1, wherein the software (42) enables the identification of the PTY information based on the PTY information signal according to at least one of broadcasting standards comprising:
Frequency Modulated Radio Data System (FM RDS), Frequency Modulated Radio Broadcast Data System (FM RBDS), In-Band-On Channel (IBOC) broadcast system, Digital Audio Broadcasting (DAB) system, Sirius Satellite Radio, XM Satellite Radio and Satellite Digital Audio Radio (SDAR).

3. The auto-tone control (40) of claim 1, wherein the software (42) enables identification of PTY information from a programming genre produced by at least one of audio media comprising: a compact disc (CD), a digital versatile disc (DVD), a flash memory stick and an audio tape.

4. The auto-tone control (40) of claim 1, wherein the PTY information indicates at least one of the program types comprising: news program, music program, announcement, advertisement, lecture, sport program, and movie program.

5. The auto-tone control (40) of claim 1, wherein the plurality of acoustic settings comprise at least one of treble setting, base setting, volume setting, fade setting, balance setting, background setting and equalizer setting.

6. An audio system (20, 100, 110, 120, 130, 140, 150) comprising:
a receiver (30, 132, 141, 172) for receiving a signal including PTY information;
an auto-tone control (40) operably connected to the receiver (30, 132, 141, 172) comprising:
a micro controller (41) for identifying program type (PTY) information based on the received PTY information signal;
software (42) operably connected to the micro controller (41), the software (42) including an optimization algorithm for enabling the identification of the PTY information and providing an acoustic setting signal based on one of a plurality of acoustic settings corresponding to the identified PTY information; and
an audio device (50, 60) operably connected to the auto-tone control (40) for producing adjusted sound.

7. The audio system (20, 100, 110, 120, 130, 140, 150) of claim 6, wherein the receiver (30, 132, 141, 172) is adapted to receive the audio and PTY information signals according to at least one of broadcasting standards comprising: Frequency Modulated Radio Data System (FM RDS), Frequency Modulated Radio Broadcast Data System (FM RBDS), In-Band-On Channel (IBOC) broadcast system, Digital Audio Broadcasting (DAB) system, Sirius Satellite Radio, XM Satellite Radio and Satellite Digital Audio Radio (SDAR).

8. The audio system (20, 100, 110, 120, 130, 140, 150) of claim 7, wherein the receiver (30, 132, 141, 172) is capable of transforming the received signals to line-level signals.

9. The audio system (20, 100, 110, 120, 130, 140, 150) of claim 6 further comprising an on-off control operably connected to the auto-tone control (40) for enabling, disabling, or modifying the auto-tone control (40).

10. The audio system (20, 100, 110, 120, 130, 140, 150) of claim 6 wherein the audio device (50, 60) includes an amplifier (50) operably connected to at least one speaker (60).

11. The audio system (20, 100, 110, 120, 130, 140, 150) of claim 6, wherein the auto-tone control (40) is disposed within the receiver (30) or the amplifier (50).

12. The audio system (20, 100, 110, 120, 130, 140, 150) of claim 10, wherein the amplifier (50) is remotely connected to the auto-tone control (40).

13. The audio system (20, 100, 110, 120, 130, 140, 150) of claim 6 wherein the receiver (30) is adapted to receive a signal from a data system.

14. The audio system (20, 100, 110, 120, 130, 140, 150) of claim 13 wherein the data system is a CD, a DVD, or a flash memory stick.

15. The audio system (20, 100, 110, 120, 130, 140, 150) of claim 6 wherein the receiver (172) is adapted to receive a signal from a high speed data system.

16. The audio system (20, 100, 110, 120, 130, 140, 150) of claim 15, wherein the high speed data system is a fiber optic system, MOST, D2B, USB, 802.11, or Intellibus.

17. A process (10) for automatically adjusting an audio output based on program type (PTY) information comprising the steps of:
(a) receiving an audio signal (11) coupled with a PTY information signal;
(b) processing the PTY information signal (12) to identify the PTY information;
(c) using a predetermined algorithm to identify acoustic settings (13) best fit the identified PTY information; and
(d) producing an adjusted audio output (14) using the identified acoustic settings.

18. The process (10) of claim 17, wherein step (a) includes receiving the audio and PTY information signals (11) according to at least one of broadcasting standards comprising: Frequency Modulated Radio Data System (FM RDS), Frequency Modulated Radio Broadcast Data System (FM RBDS), In-Band-On Channel (IBOC) broadcast system, Digital Audio Broadcasting (DAB) system, Sirius Satellite Radio, XM Satellite Radio and Satellite Digital Audio Radio (SDAR).

19. The process (10) of claim 17, wherein step (a) includes receiving the PTY information signal (11) in the form of programming genre produced by at least one of audio media comprising: a CD, a DVD, a flash memory stick and an audio tape.

20. The process (10) of claim 17, wherein step (a) includes receiving the audio and PTY information signals (11) from a high speed data system.
